# EUROPEAN PATENT SPECIFICATION

(11) **EP 3 666 551 B1**
(45) Date of publication and mention of the grant of the patent: **01.12.2021**
(21) Application number: 19215349.2
(22) Date of filing: 11.12.2019
(51) Int. Cl.: B60C 11/03, B60C 11/12

(54) **TIRE TREAD**
REIFENPROFIL
BANDE DE ROULEMENT DE PNEUMATIQUE

(30) Priority: 13.12.2018 US 201816218914
(43) Date of publication of application: 17.06.2020
(73) Proprietor: The Goodyear Tire & Rubber Company, Akron, OH 44316 (US)
(72) Inventor: SANGALLI, Roberto Giovanni, L-9835 Hoscheid-Dickt (LU); BODE, Matthias, D-63584 Gruendau (DE); FEHL, Helmut Wolfgang, D-36381 Schluchtern (DE)
(74) Representative: Kutsch, Bernd

(56) References cited:
- EP-A1- 0 578 216
- JP-A- H06 106 917

## Description

### Field of the Invention

The present invention relates generally stiffening tread patterns for improving steering performance and/or cornering performance.

### Background of the Invention

In view of resource saving and global environmental issues, pneumatic tires are increasingly being required to decrease the rolling resistance. The rolling resistance may be decreased by decreasing the energy loss in various rubber components of the tread of a tire. For that purpose, conventionally employed are elastomeric materials having as low heat generation properties as the rubber of the tread. Also, tread and sidewall volume may be decreased. However, if the volume of the tread rubber and/or sidewall rubber is decreased, the noise performance during running, ride comfort, and other performance characteristics tend to deteriorate. If a tread rubber having a low heat generation property is used, the braking performance and steering stability tend to deteriorate. Thus, the reduction of rolling resistance has conventionally had an adverse effect on still other performance characteristics such as steering stability and braking performance. JP H06 106 917 A and EP 0 578 216 A1 each describe a tread for a tire in accordance with the preamble of claim 1.

### Summary of the Invention

The invention relates to a tread in accordance with claim 1 and to a tire, preferably a pneumatic tire, in accordance with claim 12.

Dependent claims refer to preferred embodiments of the invention.

According to the invention, there is provided a tread for a tire, the tread comprising a circumferential groove and circumferential shoulder rib, the circumferential shoulder rib being delimited on the axially inner side of the circumferential shoulder rib by said circumferential groove, the circumferential shoulder rib having plurality of first linear lateral grooves circumferentially alternating with a plurality of second linear lateral grooves and having a plurality of double blind lateral sipes disposed circumferentially preferably midway between each adjacent first lateral groove and second lateral groove, the first and second lateral grooves extending axially both toward the circumferential groove, the first lateral grooves terminating nearer the circumferential groove than the second lateral grooves.

In a preferred aspect of the invention, the first lateral grooves, the second lateral grooves and the double blind sipes extend in parallel.

In a preferred aspect of the invention, the axial length of the first lateral grooves is in a range of from 105 to 130 % of the axial length of the second lateral grooves; and/or the axial length of the first lateral grooves is in a range of from 130 to 200 % of the axial length of the double blind sipes; and/or the axial length of the second lateral grooves is in a range of from 110 to 150 % of the axial length of the double blind sipes.

In one aspect of the invention, the circumferential width of the first lateral grooves is the same than the circumferential width of the second lateral grooves or is in a range of from 80 to 120 % of the circumferential width of the second lateral grooves.

In a preferred aspect of the invention, the circumferential width of the first lateral grooves is in a range of from 150 to 400 %, alternatively 200% to 300%, of the circumferential width of the double blind sipes.

In a preferred aspect of the invention, the first lateral grooves terminate axially 1 mm to 8 mm, preferably 2 mm to 5 mm, nearer the circumferential groove than the second lateral grooves.

In a preferred aspect of the invention, the axial outer end of the first lateral groove has the same axial distance from the circumferential groove than the axial outer end of the second lateral groove or the distance of the axial outer end of the second lateral groove from the circumferential groove is smaller, preferably 1 mm to 3 mm, smaller than the distance of the axial outer end of the first lateral groove from the circumferential groove.

In a preferred aspect of the invention, the double blind sipes are linear.

In a preferred aspect of the invention, the double blind sipes are parallel to the first lateral grooves and/or to the second lateral grooves.

In a preferred aspect of the invention, the double blind sipes have terminal ends farther from the circumferential groove than terminations of the first lateral grooves and/or the double blind sipes have terminal ends farther from the circumferential groove than terminations of the second lateral grooves.

In a preferred aspect of the invention, the double blind sipes have widths in a range of from 0.1 mm to 1.5 mm, preferably 0.3 mm to 1 mm, and/or the double blind sipes have radial depths in a range of from 2.0 mm to 6.0 mm, preferably 2.5 to 5.0 mm.

In a preferred aspect of the invention, at least one of the first lateral grooves, the second lateral grooves and the double blind sipes, preferably at least the first lateral grooves and the second lateral grooves or all of the first lateral grooves, the second lateral grooves and the double blind sipes, extend axially in parallel to the axial direction of the tread or extend axially under an angle in a range of from -20 degree to +20 degree, preferably -10 degree to +10 degree, with the axial direction the tread.

In one aspect of the invention, the double blind lateral sipes may not be disposed circumferentially midway between each adjacent first lateral groove and second lateral groove but the circumferential distance between a respective first lateral groove and the adjacent respective double blind sipe may be in a range of from 80% to 120% of the circumferential distance between the respective double blind sipe and the adjacent respective second lateral groove.

In a preferred aspect of the invention, the tread comprises a first circumferential groove, a second circumferential groove and a third circumferential groove, the first, second, and third circumferential grooves together defining a first circumferential shoulder rib, a first intermediate circumferential rib, a second intermediate circumferential rib and a second circumferential shoulder rib, wherein the third circumferential groove is the circumferential groove referred to above and wherein the second circumferential shoulder rib is the circumferential shoulder rib (402) referred to above.

In another aspect of the invention, the first circumferential shoulder rib comprises a different arrangement of grooves and/or sipes than the second circumferential shoulder rib, i.e. the tread and the respective tire has an asymmetric tread design.

In a preferred aspect of the invention, the first circumferential shoulder rib has plurality of first linear lateral grooves circumferentially alternating with a plurality of second linear lateral grooves, and, optionally, wherein there are no lateral sipes, in particular no double blind lateral sipes, disposed circumferentially between each adjacent first lateral groove and second lateral groove.

In a preferred aspect of the invention, tire is disclosed having a tread as described above. In this tire the circumferential shoulder rib is preferably on the 4 axially outer side of the tire when the tire is mounted on a vehicle in accordance with the tire's specification.

A preferred tread for a tire in accordance with the present invention includes a first circumferential main groove, a second circumferential main groove, and a third circumferential main groove. The first, second, and third circumferential main grooves together define a first shoulder rib, a first intermediate rib, a second intermediate rib, and a second shoulder rib. The second shoulder rib has a plurality of first linear, lateral grooves circumferentially alternating with a plurality of second linear, lateral grooves and a plurality of double blind lateral sipes disposed circumferentially midway between each adjacent first lateral groove and second lateral groove. The first and second lateral grooves extend both axially and circumferentially toward the third circumferential main groove. The first lateral grooves terminate nearer the third circumferential main groove than the second lateral grooves.

The double blind sipes are preferably linear or straight.

The double blind sipes are preferably parallel to the first lateral grooves.

The double blind sipes are preferably parallel to the second lateral grooves.

The double blind sipes are preferably parallel to both the first lateral grooves and the second lateral grooves.

The double blind sipes preferably have terminal ends farther from the third circumferential main groove than terminations of the first lateral grooves.

The double blind sipes preferably have terminal ends farther from the third circumferential main groove than terminations of the second lateral grooves.

The double blind sipes preferably have terminal ends farther from the third circumferential main groove than terminations of both the first lateral grooves and the second lateral grooves.

The double blind sipes preferably have widths of between 0.0 mm and 1.5 mm.

The double blind sipes preferably have radial depths, preferably uniform radial depths, between 2.0 mm and 6.0 mm.

### Definitions

The following definitions are controlling for the present invention.

"Axial" and "Axially" means the lines or directions that are parallel to the axis of rotation of the tire or tread when the tread is used on a tire.

"Axially Inward" means in an axial direction toward the equatorial plane of the tread or tire.

"Axially Outward" means in an axial direction away from the equatorial plane of the tread or tire.

"Circumferential" means circular lines or directions extending along the perimeter of the surface of the annular tread and perpendicular to the axial direction when the tread is used on a tire.

"Directional Tread Pattern" means a tread pattern designed for specific direction of rotation.

"Equatorial Plane" means the plane perpendicular to the tire's axis of rotation and passing through the center of its tread or the plane containing the circumferential centerline of the tread.

"Groove" means an elongated void area in a tread that may extend circumferentially or laterally in the tread in a straight, curved or zigzag manner. It is understood that all groove widths are measured perpendicular to the centerline of the groove.

"Lateral" means a direction going from one sidewall of the tire or tread towards the other sidewall of the tire.

"Radial" and "radially" mean directions radially toward or away from the axis of rotation of the tire or the tread when the tread is used on a tire.

"Shoulder" means the upper portion of sidewall just below the tread edge.

"Sidewall" means that portion of a tire between the tread and the bead.

"Sipe" means a groove having a width in the range of 0 percent to 0.8 percent of the tread width or in the range of from 0 mm to 1.5 mm. Sipes are typically formed by steel blades inserted into a cast or machined mold.

"Tread" means the ground contacting portion of a tire.

"Tread width" (TW) means the greatest axial distance across the tread, when measured (using a footprint of a tire,) laterally from shoulder to shoulder edge, when mounted on the design rim and subjected to a specified load and when inflated to a specified inflation pressure for said load.

"Void Space" means areas of the tread surface comprising grooves, notches and sipes.

### Brief Description of the Drawings

The present invention will be better understood through reference to the following description and the appended drawings, in which:
FIG. 1 is a schematic radial view of a tread in accordance with the present invention.
FIG. 2 is a schematic partial view of the tread of FIG. 1.
FIG. 3 is a schematic sectional view taken along "3-3" in FIG. 2.

### Detailed Description of Example Embodiments of the Present Invention

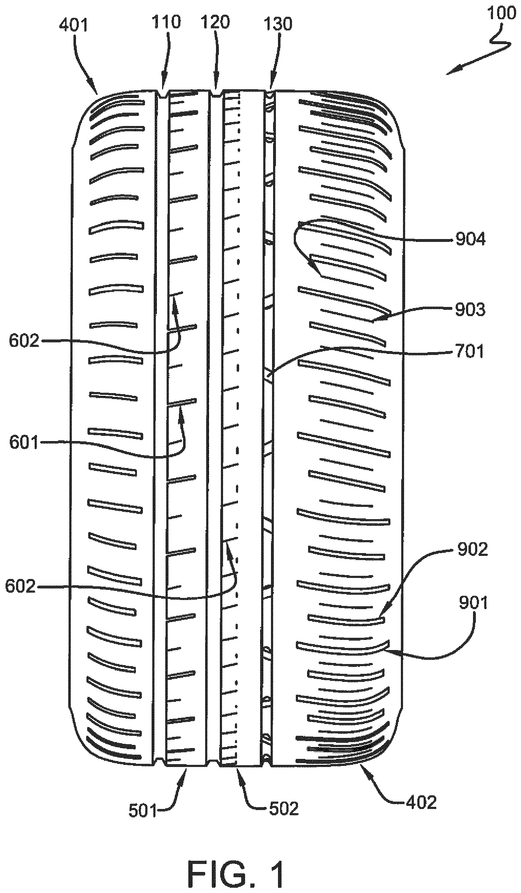

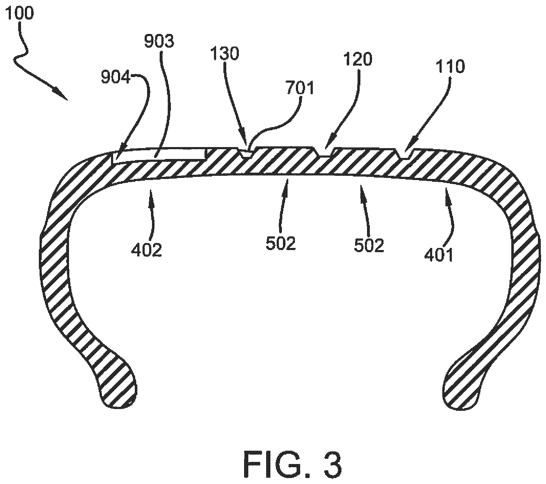

As shown in FIGS. 1 through 3, a tread 100 for use with the present invention preferably has a first circumferential main groove 110, a second circumferential main groove 120, and a third circumferential main groove 130 defining a first shoulder rib 401, a first intermediate rib 501, a second intermediate rib 502, and a second shoulder rib 402. Each rib 401, 402, 501, 502 may have a variety of transverse grooves 601 and sipes 602 suitable for tire treads.

The circumferential grooves 110, 120, 130 preferably each have the same depth.

Preferably, the depth of the circumferential grooves 110, 120, 130 is in a range of 6 to 9 mm for passenger tires and 12 to 16 mm for truck tires.

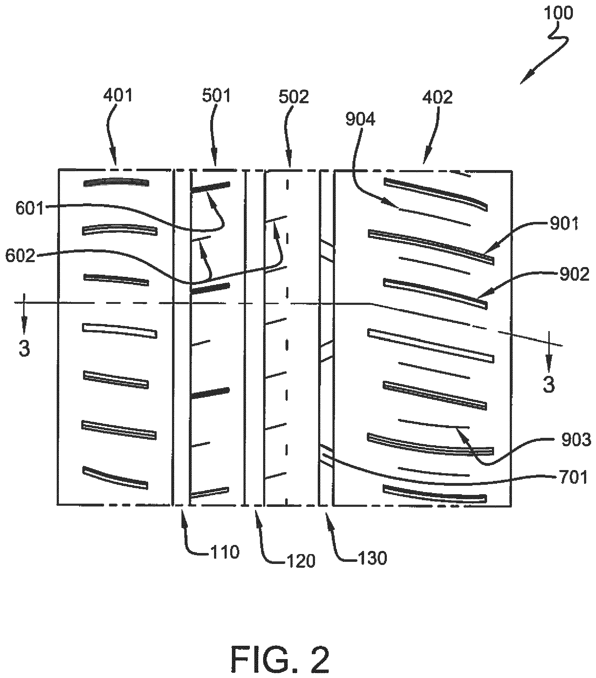

One or more than one of the circumferential main grooves 110, 120, 130 (the third groove 130 in FIGS. 1 and 2) may have several connecting bridges 701 spaced circumferentially within the main groove. Similar tread structures are disclosed in US-A-2018/0250989. As many as thirty or more connecting bridges 701 may be included in a single tread 100. As an example, the connecting bridges 701 may connect the axially outer second shoulder rib 402 to the axially inner second intermediate rib.

In accordance with the present invention, the second shoulder rib 402 has a plurality of first lateral grooves 901 circumferentially alternating with a plurality of second lateral grooves 902. The first and second lateral grooves 901, 902 are preferably parallel and extend linearly and at an angle, both axially and circumferentially, toward the third circumferential main groove 130.

The first and second lateral grooves 901, 902 preferably have the same radial depths.

The radial depth of the first and second lateral grooves 901, 902 is preferably uniform.

In one embodiment, the depth of the first and second lateral grooves 901, 902 is in a range of 6 to 9 mm for passenger tires and 12 to 16 mm for truck tires.

In another embodiment, the depth of the first and second lateral grooves 901, 902 is lower, preferably at least 1 mm or at least 3 mm lower, than the depth of the adjacent third circumferential main groove 130.

The first lateral grooves 901 preferably terminates equidistantly nearer the third circumferential main groove 130 than an equidistant termination of the second lateral grooves 902.

Further in accordance with the present invention, the second shoulder rib 402 includes a plurality of double blind, linear, lateral sipes 903 disposed preferably parallel to, and preferably circumferentially midway between, each of the adjacent first and second lateral grooves 901, 902 (FIGS. 1 and 2).

The linear sipes 903 preferably have uniform widths between 0.0 mm and 1.5 mm (e.g., 1.4 mm, 1.3 mm, 1.2 mm, 1.1 mm, 1.0 mm, 0.9 mm, etc.) before attachment to a vehicle and use.

The linear sipes 903 preferably have uniform radial depths between 2.0 mm and 6.0 mm (e.g., 5.5 mm, 5.0 mm, 4.5 mm, 4.0 mm, 3.5 mm, 3.0 mm, etc.).

The linear sipes 903 preferably have terminal ends 904 equidistant and farther from the third circumferential main groove 130 than the first lateral grooves 901 and the second lateral grooves 902.

During cornering of the vehicle, the linear sipes 903 may close down, with the widths decreasing to 0.0 mm. The sides of the linear sipes 903 thereby interlock or engage each other to reinforce the second shoulder rib 402 during cornering of the attached vehicle. The linear sipes 903 may also provide flexibility to the second shoulder rib 402 during straight ahead motion of the attached vehicle, with the widths remaining as designed between 0.0 mm and 1.5 mm. The linear sipes further improve cooling and traction of the second shoulder rib 402 of the tread 100 during straight ahead motion of the vehicle.

As shown in FIGS. 1 through 3, such a tread 100 may define an asymmetric tread pattern for performing an advantageous dynamic load transfer in cornering conditions with the outer part of tread getting a higher load and the inside of the tire experiencing reduced load. Therefore, it may be advantageous and much more effective to provide a stiff outside area of a tread 100.

## Claims

1. A tread for a tire, the tread (100) comprising a circumferential groove (130) and a first circumferential shoulder rib (401) and a second circumferential shoulder rib (402), the second circumferential shoulder rib (402) being delimited on the axially inner side of the circumferential shoulder rib (402) by said circumferential groove (130), the circumferential shoulder rib (402) having plurality of first linear lateral grooves (901) circumferentially alternating with a plurality of second linear lateral grooves (902) and having a plurality of double blind lateral sipes (903) disposed circumferentially preferably midway between each adjacent first lateral groove (901) and second lateral groove (902), the first and second lateral grooves (901, 902) extending axially both toward the circumferential groove (130), the first lateral grooves (901) terminating nearer the circumferential groove (130) than the second lateral grooves (902), **characterized in that** (i) the circumferential width of the first lateral grooves (901) is the same than the circumferential width of the second lateral grooves (902) or is in a range of from 80 to 120 % of the circumferential width of the second lateral grooves (902), and/or **in that** (ii) the first circumferential shoulder rib (401) comprises a different arrangement of grooves and/or sipes than the second circumferential shoulder rib (402).

2. The tread of claim 1 wherein the first lateral grooves (901), the second lateral grooves (902) and the double blind sipes (904) extend in parallel.

3. The tread of claim 1 or 2 wherein
(i) the axial length of the first lateral grooves (901) is in a range of from 105 to 130 % of the axial length of the second lateral grooves (902); and/or
(ii) the axial length of the first lateral grooves (901) is in a range of from 130 to 200 % of the axial length of the double blind sipes (904); and/or
(iii) the axial length of the second lateral grooves (901) is in a range of from 110 to 150 % of the axial length of the double blind sipes (904).

4. The tread of at least one of the previous claims wherein the circumferential width of the first lateral grooves (901) is in a range of from 150 to 400 %, alternatively 200% to 300%, of the circumferential width of the double blind sipes (904).

5. The tread of at least one of the previous claims wherein the first lateral grooves (901) terminate axially 1 mm to 8 mm, preferably 2 mm to 5 mm, nearer the circumferential groove (130) than the second lateral grooves (902).

6. The tread of at least one of the previous claims wherein the axial outer end of the first lateral groove (901) has the same axial distance from the circumferential groove (130) than the axial outer end of the second lateral groove (902) or wherein the distance of the axial outer end of the second lateral groove (902) from the circumferential groove (130) is smaller, preferably 1 mm to 3 mm, smaller than the distance of the axial outer end of the first lateral groove (901) from the circumferential groove (130).

7. The tread of at least one of the previous claims wherein the double blind sipes (904) are parallel to the first lateral grooves (901) and/or to the second lateral grooves (902).

8. The tread of at least one of the previous claims wherein the double blind sipes (904) have terminal ends farther from the circumferential groove (130) than terminations of the first lateral grooves (901) and/or wherein the double blind sipes (904) have terminal ends farther from the circumferential groove (130) than terminations of the second lateral grooves (902).

9. The tread of at least one of the previous claims wherein the double blind sipes (904) have widths in a range of from 0.1 mm to 1.5 mm, preferably 0.3 mm to 1 mm, and/or wherein the double blind sipes (904) have radial depths in a range of from 2.0 mm to 6.0 mm, preferably 2.5 to 5.0 mm.

10. The tread of at least one of the previous claims wherein the double blind lateral sipes (903) are not disposed circumferentially midway between each adjacent first lateral groove (901) and second lateral groove (902) but the circumferential distance between a respective first lateral groove (901) and the adjacent respective double blind sipe (904) is in a range of from 80% to 120% of the circumferential distance between the respective double blind sipe (904) and the adjacent respective second lateral groove (902).

11. The tread of at least one of the previous claims, the tread (100) comprising a first circumferential groove (110), a second circumferential groove (120) and a third circumferential groove (130), the first, second, and third circumferential grooves (110, 120, 130) together defining a first circumferential shoulder rib (401), a first intermediate circumferential rib (501), a second intermediate circumferential rib (502) and a second circumferential shoulder rib (402), wherein the third circumferential groove (130) is the circumferential groove (130) referred to in the previous claims and wherein the second circumferential shoulder rib (402) is the circumferential shoulder rib (402) referred to in the previous claims.

12. A tire having the tread in accordance with at least one of the previous claims.

13. The tire of claim 12 wherein the circumferential shoulder rib (402) is on the axially outer side of the tire when the tire is mounted on a vehicle in accordance with the tire's specification.

## Patentansprüche

1. Lauffläche für einen Reifen, wobei die Lauffläche (100) eine Umfangsrille (130) und eine erste Umfangsschulterrippe (401) und eine zweite Umfangsschulterrippe (402) umfasst, wobei die zweite Umfangsschulterrippe (402) auf der axial inneren Seite der Umfangsschulterrippe (402) durch die Umfangsrille (130) begrenzt ist, wobei die Umfangsschulterrippe (402) mehrere erste lineare seitliche Rillen (901) aufweist, die sich in Umfangsrichtung mit mehreren zweiten linearen seitlichen Rillen (902) abwechseln, und mehrere seitliche Doppelblendenlamellen (903) aufweist, die in Umfangsrichtung vorzugsweise in der Mitte zwischen jeder angrenzenden ersten seitlichen Rille (901) und zweiten seitlichen Rille (902) eingerichtet sind, wobei sich die ersten und zweiten seitlichen Rillen (901, 902) beide in Richtung der Umfangsrille (130) erstrecken axial erstrecken, wobei die ersten seitlichen Rillen (901) näher an der Umfangsrille (130) enden als die zweiten seitlichen Rillen (902), **dadurch gekennzeichnet, dass** (i) die Umfangsbreite der ersten seitlichen Rillen (901) gleich der Umfangsbreite der zweiten seitlichen Rillen (902) ist oder in einem Bereich von 80 bis 120 % der Umfangsbreite der zweiten seitlichen Rillen (902) liegt, und/oder dadurch, dass (ii) die erste Umfangsschulterrippe (401) eine andere Anordnung von Rillen und/oder Lamellen aufweist als die zweite Umfangsschulterrippe (402).

2. Lauffläche nach Anspruch 1, wobei die ersten seitlichen Rillen (901), die zweiten seitlichen Rillen (902) und die Doppelblendenlamellen (904) sich parallel erstrecken.

3. Lauffläche nach Anspruch 1 oder 2, wobei
(i) die axiale Länge der ersten seitlichen Rillen (901) in einem Bereich von 105 bis 130 % der axialen Länge der zweiten seitlichen Rillen (902) liegt; und/oder
(ii) die axiale Länge der ersten seitlichen Rillen (901) in einem Bereich von 130 bis 200 % der axialen Länge der Doppelblendenlamellen (904) liegt; und/oder
(iii) die axiale Länge der zweiten seitlichen Rillen (901) in einem Bereich von 110 bis 150 % der axialen Länge der Doppelblendenlamellen (904) liegt.

4. Lauffläche nach wenigstens einem der vorhergehenden Ansprüche, wobei die Umfangsbreite der ersten seitlichen Rillen (901) in einem Bereich von 150 bis 400 %, alternativ 200 % bis 300 %, der Umfangsbreite der Doppelblendenlamellen (904) liegt.

5. Lauffläche nach wenigstens einem der vorhergehenden Ansprüche, wobei die ersten seitlichen Rillen (901) 1 mm bis 8 mm, vorzugsweise 2 mm bis 5 mm, näher an der Umfangsrille (130) axial enden als die zweiten seitlichen Rillen (902).

6. Lauffläche nach wenigstens einem der vorhergehenden Ansprüche, wobei das axiale äußere Ende der ersten seitlichen Rille (901) den gleichen axialen Abstand von der Umfangsrille (130) aufweist wie das axiale äußere Ende der zweiten seitlichen Rille (902) oder wobei der Abstand des axialen äußeren Endes der zweiten seitlichen Rille (902) von der Umfangsrille (130) kleiner ist, vorzugsweise 1 mm bis 3 mm, kleiner als der Abstand des axialen äußeren Endes der ersten seitlichen Rille (901) von der Umfangsrille (130).

7. Lauffläche nach wenigstens einem der vorhergehenden Ansprüche, wobei die Doppelblendenlamellen (904) parallel zu den ersten seitlichen Rillen (901) und/oder zu den zweiten seitlichen Rillen (902) sind.

8. Lauffläche nach wenigstens einem der vorhergehenden Ansprüche, wobei die Doppelblendenlamellen (904) Anschlussenden aufweisen, die weiter von der Umfangsrille (130) entfernt sind als Enden der ersten seitlichen Rillen (901) und/oder wobei die Doppelblendenlamellen (904) Anschlussenden aufweisen, die weiter von der Umfangsrille (130) entfernt sind als Enden der zweiten seitlichen Rillen (902).

9. Lauffläche nach wenigstens einem der vorhergehenden Ansprüche, wobei die Doppelblendenlamellen (904) Breiten in einem Bereich von 0,1 mm bis 1,5 mm, vorzugsweise 0,3 mm bis 1 mm aufweisen, und/oder wobei die Doppelblendenlamellen (904) radiale Tiefen in einem Bereich von 2,0 mm bis 6,0 mm, vorzugsweise 2,5 bis 5,0 mm aufweisen.

10. Lauffläche nach wenigstens einem der vorhergehenden Ansprüche, wobei die seitlichen Doppelblendenlamellen (903) nicht in Umfangsrichtung in der Mitte zwischen jeder angrenzenden ersten seitlichen Rille (901) und zweiten seitlichen Rille (902) eingerichtet sind, sondern der Umfangsabstand zwischen einer jeweiligen ersten seitlichen Rille (901) und der angrenzenden jeweiligen Doppelblendenlamelle (904) in einem Bereich von 80 % bis 120 % des Umfangsabstands zwischen der jeweiligen Doppelblendenlamelle (904) und der angrenzenden jeweiligen zweiten seitlichen Rille (902) liegt.

11. Lauffläche nach wenigstens einem der vorhergehenden Ansprüche, wobei die Lauffläche (100) eine erste Umfangsrille (110), eine zweite Umfangsrille (120) und eine dritte Umfangsrille (130) umfasst, wobei die erste, die zweite und die dritte Umfangsrille (110, 120, 130) zusammen eine erste Umfangsschulterrippe (401), eine erste Umfangszwischenrippe (501), eine zweite Umfangszwischenrippe (502) und eine zweite Umfangsschulterrippe (402) definieren, wobei die dritte Umfangsrille (130) die Umfangsrille (130) ist, auf die in den vorhergehenden Ansprüchen Bezug genommen wird, und wobei die zweite Umfangsschulterrippe (402) die Umfangsschulterrippe (402) ist, auf die in den vorhergehenden Ansprüchen Bezug genommen wird.

12. Reifen, der die Lauffläche nach wenigstens einem der vorhergehenden Ansprüche aufweist.

13. Reifen nach Anspruch 12, wobei sich die Umfangsschulterrippe (402) auf der axial äußeren Seite des Reifens befindet, wenn der Reifen gemäß der Reifenspezifikation an einem Fahrzeug montiert ist.

## Revendications

1. Bande de roulement destinée à un bandage pneumatique, la bande de roulement (100) comprenant une rainure circonférentielle (130) et une première nervure circonférentielle d'épaulement (401) et une deuxième nervure circonférentielle d'épaulement (402), la deuxième nervure circonférentielle d'épaulement (402) étant délimitée sur le côté interne de la nervure circonférentielle d'épaulement (402), dans la direction axiale, par ladite rainure circonférentielle (130), la nervure circonférentielle d'épaulement (402) possédant un certain nombre de premières rainures latérales linéaires (901) qui alternent, dans la direction circonférentielle, avec un certain nombre de deuxièmes rainures latérales linéaires (302) et possédant un certain nombre de doubles lamelles latérales borgnes (903) qui sont disposées, dans la direction circonférentielle, de préférence à mi-distance entre chaque première rainure latérale (901) et chaque deuxième rainure latérale (902) qui sont adjacentes, les premières et les deuxièmes rainures latérales (901, 902) s'étendant dans la direction axiale toutes deux dans la direction de la rainure circonférentielle (130), les premières rainures latérales (901) se terminant plus près de la rainure circonférentielle (130) que les deuxièmes rainures latérales (902), **caractérisée en ce que** (i) la largeur circonférentielle des premières rainures latérales (901) est égale à la largeur circonférentielle des deuxièmes rainures latérales (902) ou se situe dans une plage qui représente de 80 à 120 % de la largeur circonférentielle des deuxièmes rainures latérales (902) ; et/ou **en ce que** (ii) la première nervure circonférentielle d'épaulement (401) comprend un arrangement différent de rainures et/ou de lamelles de celui de la deuxième nervure circonférentielle d'épaulement (402).

2. Bande de roulement selon la revendication 1, dans laquelle les premières rainures latérales (901), les deuxièmes rainures latérales (902) et les doubles lamelles borgnes (904) s'étendent en parallèle.

3. Bande de roulement selon la revendication 1 ou 2, dans laquelle :
(i) la longueur axiale des premières rainures latérales (901) se situe dans une plage qui représente de 105 à 130 % de la longueur axiale des deuxièmes rainures latérales (902) ; et/ou
(ii) la longueur axiale des premières rainures latérales (901) se situe dans une plage qui représente de 130 à 200 % de la longueur axiale des doubles lamelles borgnes (904) ; et/ou
(iii) la longueur axiale des premières rainures latérales (901) se situe dans une plage qui représente de 110 à 150 % de la longueur axiale des doubles lamelles borgnes (904).

4. Bande de roulement selon au moins une des revendications précédentes, dans laquelle la largeur circonférentielle des premières rainures latérales (901) se situe dans une plage qui représente de 150 à 400 %, en variante de 200 % à 300 % de la largeur circonférentielle des doubles lamelles borgnes (904).

5. Bande de roulement selon au moins une des revendications précédentes, dans laquelle les premières rainures latérales (901) se terminent dans la direction axiale à concurrence d'une distance de 1 mm à 8 mm, de préférence de 2 mm à 5 mm, plus près de la rainure circonférentielle (130) que les deuxièmes rainures latérales (902).

6. Bande de roulement selon au moins une des revendications précédentes, dans laquelle l'extrémité externe axiale des premières rainures latérales (901) possède la même distance axiale à partir de la rainure circonférentielle (130) que l'extrémité externe axiale des deuxièmes rainures latérales (902) ou dans laquelle la distance de l'extrémité externe axiale des deuxièmes rainures latérales (902) à partir de la rainure circonférentielle (130) est inférieure, de préférence inférieure, à raison de 1 mm à 3 mm, à la distance de l'extrémité externe axiale des premières rainures latérales (901) à partir de la rainure circonférentielle (130).

7. Bande de roulement selon au moins une des revendications précédentes, dans laquelle les doubles lamelles borgnes (904) sont parallèles aux premières rainures latérales (901) et/ou aux deuxièmes rainures latérales (902).

8. Bande de roulement selon au moins une des revendications précédentes, dans laquelle les doubles lamelles borgnes (904) possèdent des extrémités terminales qui sont situées plus loin par rapport à la rainure circonférentielle (130) que les terminaisons des premières rainures latérales (901) ; et/ou dans laquelle les doubles lamelles borgnes (904) possède des extrémités terminales qui sont situées plus loin par rapport à la rainure circonférentielle (130) que les terminaisons des deuxièmes rainures latérales (902).

9. Bande de roulement selon au moins une des revendications précédentes, dans laquelle les doubles lamelles borgnes (904) possèdent des largeurs qui se situent dans une plage allant de 0,1 mm à 1,5 mm, de préférence de 0,3 mm à 1 mm ; et/ou dans laquelle les doubles lamelles borgnes (904) possèdent des profondeurs radiales qui se situent dans une plage allant de 2,0 mm à 6,0 mm, de préférence de 2,5 mm à 5,0 mm.

10. Bande de roulement selon au moins une des revendications précédentes, dans laquelle les doubles lamelles latérales borgnes (903) ne sont pas disposées dans la direction circonférentielle à mi-distance entre chaque première rainure latérale (901) et chaque deuxième rainure latérale (902) qui sont adjacentes, mais la distance circonférentielle entre une première rainure latérale respective (901) et la double lamelle borgne respective adjacente (904) se situe dans une plage qui représente de 80 % à 120 % de la distance circonférentielle entre la double lamelle borgne respective (904) et la deuxième rainure latérale respective adjacente (902).

11. Bande de roulement selon au moins une des revendications précédentes, la bande de roulement (100) comprenant une première rainure circonférentielle (110), une deuxième rainure circonférentielle (120) et une troisième rainure circonférentielle (130), la première, la deuxième et la troisième rainure circonférentielle (110, 120, 130) définissant de manière conjointe une première nervure circonférentielle d'épaulement (401), une première nervure circonférentielle intermédiaire (501), une deuxième nervure circonférentielle intermédiaire (502) et une deuxième nervure circonférentielle d'épaulement (402) ; dans laquelle la troisième rainure circonférentielle (130) représente la rainure circonférentielle (130) à laquelle il est fait référence dans les revendications précédentes ; et dans laquelle la deuxième nervure circonférentielle d'épaulement (402) représente la nervure circonférentielle d'épaulement (402) à laquelle il est fait référence dans les revendications précédentes.

12. Bandage pneumatique qui possède la bande de roulement en conformité avec au moins une des revendications précédentes.

13. Bandage pneumatique selon la revendication 12, dans lequel la nervure circonférentielle d'épaulement (402) est disposée sur le côté externe du bandage pneumatique, dans la direction axiale, lorsque le bandage pneumatique est monté sur un véhicule en respectant les spécifications du bandage pneumatique.
